# EUROPEAN PATENT APPLICATION

(11) **EP 1 440 812 A2**
(43) Date of publication of application: **28.07.2004**
(21) Application number: 04001618.0
(22) Date of filing: 26.01.2004
(51) Int. Cl.: B41M 5/035, B41M 5/40

(54) **Method and laminate for applying dye sublimated ink decoration to a surface**

(30) Priority: 27.01.2003 US 351889
(71) Applicant: Transilwrap Company, Inc., Franklin Park, IL 60131 (US)
(72) Inventor: Flaherty, Robert C., Richmond, IN 47374 (US)
(74) Representative: Heusler, Wolfgang, Dipl.-Ing.

(57) **Abstract**

A method for printing a dye sublimation ink decoration on a surface (21) of a type which is generally incompatible with dye sublimation direct image transfer. The method includes the steps of applying a coating (11) receptive to dye sublimation ink printing to one surface of a release sheet. Applying an adhesive (17) to the exposed surface of the coating. Removing the release sheet from the coating and printing a decoration (25) on the coating using a sublimation heat transfer printing process (27). Positioning the adhesive (17) against the surface which is to receive the direct image transfer to adhere and support the coating and the release sheet on the surface. In a further embodiment of the invention, a bonding enhancing layer (15) is applied to the dye sublimation ink printing receptive coating, an embossable polyester layer (31) is applied to the bonding enhancing layer, a hologram (33) is applied to the embossable polyester layer and a high refractive index layer (35) is applied to the hologram embossable layer all before the adhesive (17) is positioned against the direct image receiving surface (21) and is adhered thereto.

## Description

### Background and Summary of the Invention

This invention is directed to a method of attaching a dye sublimated ink decoration to a surface of the type which is generally incompatible with dye sublimation direct image transfer and a laminate for use in practicing the method. Sublimation transfer processes have been found to be particularly useful in printing full color reproductions onto polyester fabrics. Other materials, especially plastics, with the exception of polyvinyl chloride (PVC), are not well suited to dye sublimation ink transfer. Davis, U.S. Patent No. 4,395,263 teaches a process for the heat transfer of sublimable dyestuffs to various organic and inorganic surfaces, but the process requires treatment of the surface receiving the dye transfer with a thermosetable binder layer followed by curing to form a thermoset, heat resistant laminate. Poole, U.S. Patent No. 5,962,368 teaches the decoration of objects using heat shrink film as a transfer sheet for sublimation imprinting on an object. The sublimation ink is first imprinted onto a heat shrink film. The object is then enveloped in the heat shrink film and the film is heated to shrink over the object to be decorated.

This invention is directed to a method for applying a dye sublimation ink decoration, which may be text, images or a combination thereof, to surfaces which are normally not compatible to receive such decorations absence special treatment of the surfaces. The invention is also directed to a laminate to be used in the practice of the method.

An object of this invention is a laminate which can be adhered to a smooth, flat surface of almost any material and has a surface which is receptive to dye sublimation direct image transfer.

Another object of this invention is a laminate which can be adhered to a smooth, flat surface of a material which laminate incorporates a tangible hologram embedded therein and has a surface which is receptive to dye sublimation direct image transfer.

An additional object of this invention is a method of using a laminate having a surface which is receptive to a dye sublimation direct image transfer by printing on the surface of the laminate using a sublimation heat transfer printing process and then adhering the laminate to the incompatible surface.

### Brief Description of the Drawings

The invention is illustrated more or less diagrammatically in the following drawings wherein:

Fig. 1 is a cross-sectional view through a first embodiment of a laminate of this invention with the thickness of the layers of the laminate greatly exaggerated for clarity of illustration;

Fig. 2 is an illustration of a step in a first embodiment of a method of this invention utilizing a laminate of the type shown in Fig. 1;

Fig. 3 is an illustration of a subsequent step in a first embodiment of a method of this invention showing a printer applying a decorative surface to a laminate of the type shown in Fig. 1;

Fig. 4 is a cross-sectional illustration showing a hologram being applied to a second embodiment of a laminate of this invention;

Fig. 5 is a cross-sectional view taken through a second embodiment of a laminate of this invention with the thickness of the layers of the laminate greatly exaggerated for clarity of illustration; and

Fig. 6 is an illustration of another step in a second embodiment of a method of this invention showing a printer applying a decorative surface to a laminate of the type shown in Fig. 5.

### Description of Invention

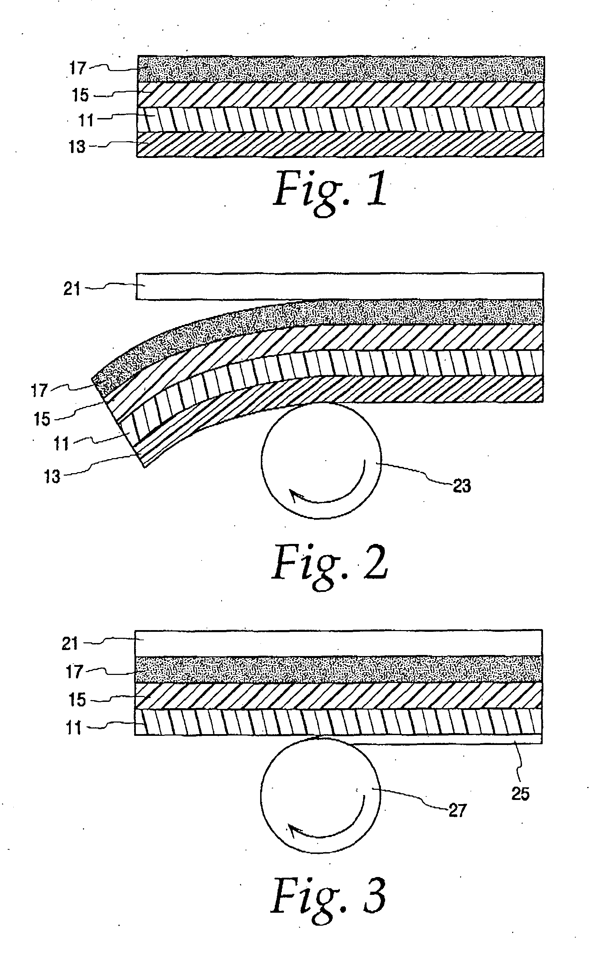

A first embodiment of the invention is shown in Figs. 1-3 of the drawings. The layers of the laminates are shown in cross-sections with their thicknesses greatly exaggerated for clarity of illustration. In the first step of this embodiment of the invention, a dye sublimation acceptance layer 11 is applied to one side of a release sheet 13 by a gravure press. Dye sublimation acceptance materials are well-known in the art and various types are listed in the U. S. Patent No. 5,962,368. Many commercially available dye sublimation acceptance coatings would be acceptable in this application. These commercial coatings consist of vinyl components (vinyl chloride, vinyl acetate, vinyl ester) dissolved in solvent such as methyl ethyl ketone or toluene. Additional components may be added to inhibit evaporation or to change the viscosity at the coating equipment.

A primer layer 15 is applied to the opposite or exposed side of the dye sublimation acceptance layer 11. The primer layer is used to improve the adherence of a layer of adhesive 17 which is applied to the opposite or exposed side of the dye sublimation acceptance layer 11. The adhesive 17 is preferably a heat sensitive polyolefin.or extrudable polyester. Suitable primers include any commercially available primers distributed by ADM-Tronics (Polaqua brand-name) or Mica Corporation (such as A-131X) or similar product. Any other materials that could be used as primers to enhance adhesion would work for this layer. Included in this list are dissolved polyester components, dissolved styrene components, dissolved vinyl components, and many others. The laminate as shown in Fig. 1 of the drawings can be sold as a commercial product to those who wish to apply a dye sublimation acceptance layer to surfaces of materials, especially materials that are not receptive to dye sublimation acceptance printing without the prior treatment of the surface of the material. The use of this laminate does not require heat treatment of a transfer film containing a sublimation ink decoration.

Fig. 2 of the drawings shows the step of adhering of the composite laminate of Fig. 1 to a substrate 21. The substrate 21 may be made of almost any material, but in this illustrative example is a laminate of the type used in credit cards, ATM cards, driver's licenses, and other forms of identification. A conventional substrate used for such purposes is formed of an outer film of a hard, tough, abrasion resistant, biaxially oriented therm oset polyester resin. The inner layer of the conventional substrate 21 is a polyester resin, usually a polyethylene terephthalete. A layer of a thermoplastic adhesive resin is located between the inner and outer layers of the substrate 21. The invention is not limited to the use of this particular substrate, but is merely an example of a surface to which it is difficult to directly apply an ink sublimation decoration. Other substrates to which the composite laminate of Fig. 1 have been adhered include talc-filled polypropylene, synthetic paper, high impact polystyrene, wood, high pressure laminated sheets of melamine and phenolic plastics, aluminum and paper.

The adhesive layer 17 of the composite laminate of Fig. 1 is positioned against the substrate 21 and the substrate and the composite laminate are processed by a commercial laminator 23 which engages a surface of the release sheet 13 as shown in Fig. 2.

Fig. 3 of the drawings shows the application of a sublimation ink decoration 25 to the dye sublimation acceptance layer 11 by a printer 27. The printing may be accomplished through the use of any conventional heat transfer printing process.

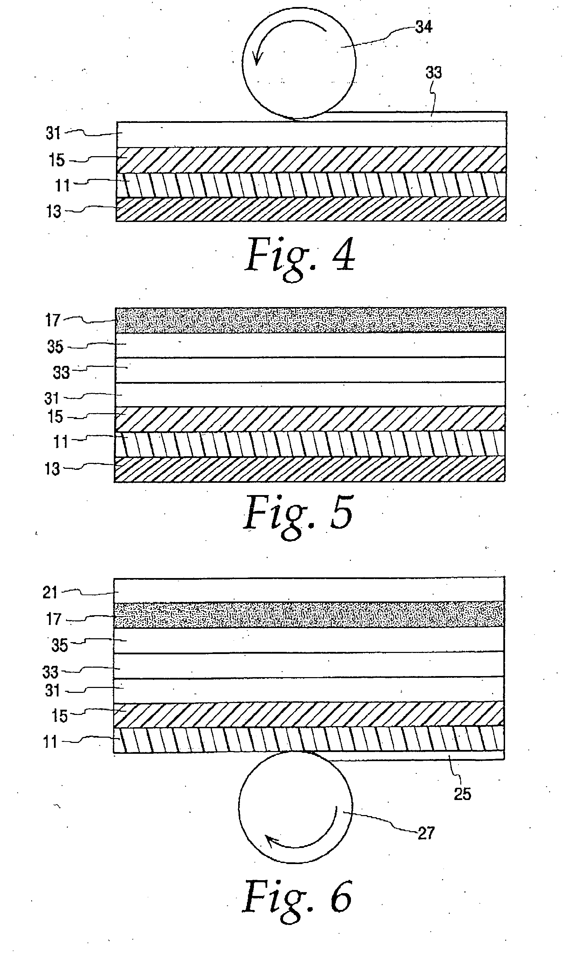

A second embodiment of the invention is shown in Figs. 4, 5, and 6 of the drawings. In the second embodiment of the invention, a dye sublimation acceptance layer 11 is laminated to a release sheet 13 and a primer layer 15 is applied to the opposite side of the dye sublimation acceptance layer. An embossable layer 31 is next applied to the primer layer 15 and a hologram 33 is applied to the embossable layer 31. The embossable layer 31 is a soft polyester PETG which is amorphous, not crystalline. A high index of refraction (HRI) layer 35 is applied over the embossable layer 31 as shown in Fig. 5 of the drawings. The HRI layer increases the index of refraction of the hologram 33 in the embossable layer 31. A suitable material for use as the HRI layer is indium tin oxide (ITO) or zinc sulfate.

An adhesive layer 17 is applied to the opposite side of the HRI layer 35 as shown in Fig. 5 of the drawings. This adhesive is of the type previously described for use with the first embodiment of the invention.

Fig. 6 illustrates the composite laminate after the adhesive layer 17 has been adhered to a conventional substrate 21 of the type previously described. Fig. 6 also shows the application of a sublimation ink decoration 25 to the dye sublimation acceptance layer 11 by a printer 27. The printing may be accomplished by any conventional heat transfer printing process.

## Claims

1. A laminate for facilitating sublimation dye printing on surfaces which are normally not adaptable to such printing, said laminate including:
a release sheet,
a coating receptive to dye sublimated ink printing applied to one surface of said release sheet, and
an adhesive applied to said coating on its surface opposite to said release sheet.

2. A method for applying a dye sublimation ink decoration to a surface of a type which is generally incompatible with dye sublimation direct image transfer,
said method including the steps of:
applying a coating receptive to dye sublimation ink printing on one surface of a release sheet,
applying an adhesive to a surface of said coating opposite to said one surface of said release sheet,
removing said release sheet from said coating,
printing a decoration on said coating using a sublimation heat transfer printing process, and
positioning said adhesive against said generally incompatible surface to adhere and support said coating and said release sheet on said surface.

3. The method of claim 2 further including the step of:
applying a bonding enhancing coating to said dye sublimation ink printing receptive coating before applying said adhesive.

4. The method of claim 2 further including the steps of:
applying a bonding enhancing coating to said dye sublimation ink printing receptive coating,
applying an embossable polyester coating to said bonding enhancing coating, applying a hologram to said embossable polyester coating,
applying a high refractive index coating to said hologram embossable polyester coating,
all before applying said adhesive.

5. A laminate including:
a layer of a dye sublimation ink printing receptive material,
a bonding enhancing layer applied to such dye sublimation ink printing receptive layer,
an embossable polyester layer applied to said bonding enhancing layer,
a hologram applied to said embossable polyester layer,
a high refractive index layer applied to said hologram embossable polyester layer, and
an adhesive applied to said high refractive index layer.

6. The laminate of claim 5 further including a substrate laminated to said adhesive.

7. The laminate of claim 6 further including a dye sublimated ink data applied to said dye sublimation ink printing receptive layer.
